# EUROPEAN PATENT APPLICATION

(11) **EP 1 820 748 A1**
(43) Date of publication of application: **22.08.2007**
(21) Application number: 06250884.1
(22) Date of filing: 20.02.2006
(51) Int. Cl.: B65D 77/04, B65D 85/10, B65D 65/46, A24F 15/12

(54) **Kit for the self-assembly of a reclosable container of consumer goods**

(71) Applicant: Philip Morris Products S.A., 2000 Neuchâtel (CH)
(72) Inventor: The designation of the inventor has not yet been filed
(74) Representative: Millburn, Julie Elizabeth

(57) **Abstract**

A kit for the self-assembly of a reclosable container of consumer goods includes a disposable cartridge (2) of consumer goods (6) comprising: a sealed enclosure of consumer goods (6); and an outer housing (12) around the sealed enclosure of consumer goods (6) having an opening through which the sealed enclosure of consumer goods (6) is accessible. The kit also includes a reusable closure (4) comprising: a dispensing aperture (32); and a lid (34) moveable between a closed position, in which the lid (34) covers the dispensing aperture (32), and an open position, in which the dispensing aperture (32) is accessible. The reusable closure (4) and the outer housing (12) of the disposable cartridge (2) are releasably engageable so that the dispensing aperture (32) of the reusable closure (4) and the opening of the outer housing (12) are substantially aligned. The kit is particularly suitable for the self-assembly of a reclosable pack of smoking articles such as cigarettes.

## Description

The present invention relates to a kit for the self-assembly of a reclosable container of consumer goods and in particular to a kit for the self-assembly of a reclosable pack of smoking articles such as cigarettes.

Conventional hinge-lid cardboard packs of cigarettes typically contain a bundle of cigarettes wrapped in an inner liner consisting of a folded sheet of metal foil or metallised paper. In addition, such packs normally also include a cardboard inner frame. To preserve the freshness of the cigarettes prior to opening of the pack, conventional hinge-lid cardboard packs of cigarettes are also usually shrink wrapped or otherwise overwrapped with a transparent sheet of, for example, polyethylene or polypropylene film.

None of the components of a conventional hinge-lid cardboard pack of cigarettes are reused. The consumer discards the overwrap and a portion of the inner liner when he or she initially opens the pack. When the consumer finishes the cigarettes, the inner frame, remainder of the inner liner and the hinge-lid cardboard pack itself are discarded. A variety of other consumer goods are also sold in disposable packaging that is not intended or capable of being reused.

It would be desirable to provide reclosable packaging for cigarettes and other smoking articles that maintains the freshness of the smoking articles, but which generates less waste material than conventional cardboard hinge-lid cigarette packs.

According to the present invention there is provided a kit for the self-assembly of a reclosable container of consumer goods including: a disposable cartridge comprising a sealed enclosure of consumer goods and an outer housing around the sealed enclosure of consumer goods having an opening through which the sealed enclosure of consumer goods is accessible; and a reusable closure comprising a dispensing aperture and a lid moveable between a closed position, in which the lid covers the dispensing aperture, and an open position, in which the dispensing aperture is accessible, the reusable closure and the outer housing of the disposable cartridge being releasably engageable so that the dispensing aperture of the reusable closure and the opening of the outer housing are substantially aligned.

Preferably, the consumer goods are smoking articles such as, for example, cigarettes, cigars or cigarillos. More preferably, the smoking articles are cigarettes. It will be appreciated that through an appropriate choice of the dimensions of the disposable cartridge and reusable closure, kits according to the invention for the self-assembly of reclosable containers holding different numbers of, for example, regular size (approximately 80mm in length), king size (approximately 100mm in length), super-king size, slim or super-slim cigarettes may be provided.

Preferably, the outer housing is a sleeve having at least one open end. More preferably, the outer housing is a sleeve having an open upper end. The opening through which the sealed enclosure of consumer goods is accessible need not, however, be located at an end of the outer housing. For example, the outer housing may have an opening in the side thereof through which the sealed enclosure of consumer goods is accessible.

The outer housing may be formed from any suitable material including, but not limited to, stiff paper, cardboard, plastic and combinations thereof. Preferably, the outer housing is formed from cardboard.

In a preferred embodiment of the invention, the outer housing is formed from a biodegradable material.

Through an appropriate choice of the material(s) from which the outer housing is formed, disposable cartridges of kits according to the invention and reclosable containers formed from the kits, may afford good physical protection to the consumer goods therein. The term "disposable" is used to indicate that the cartridge is not intended to be reused.

The external surface of the outer housing may be printed, embossed, debossed or otherwise embellished (e.g. using labels or stickers) with manufacturer or brand logos, trade marks, slogans and other consumer information and indicia.

Preferably, the sealed enclosure protrudes from the outer housing through the opening.

Preferably, the sealed enclosure of consumer goods comprises a sheet of protective material wrapped around the consumer goods.

Preferably the protective material is a barrier material, more preferably a barrier material that is substantially moisture impermeable, most preferably a barrier material that is substantially moisture impermeable and substantially air impermeable.

Preferably, the protective material is substantially light impermeable. The use of an opaque protective material advantageously protects the smoking articles or other consumer goods in the sealed enclosure from exposure to light and potential damage.

Preferably, the protective material is a metallised film or a laminated film. Preferably, the protective material includes at least one plastic material, for example a polyolefin. Examples of metallised films suitable for use as the protective material include, but are not limited to, metallised polypropylene films and metallised oriented polypropylene films. Where the protective material is a laminated film, the laminated film preferably comprises an aluminium layer. Examples of laminated films suitable for use as the protective material include, but are not limited to, polypropylene/aluminium /polypropylene laminated films, polyethylene /aluminium/polyethylene laminated films and polyethylene terephthalate (PET)/aluminium/polyethylene terephthalate (PET) laminated films.

Most preferably, the protective material is a metallised oriented polypropylene film.

Preferably, the protective material is hermetically sealed around the consumer goods to form the sealed enclosure. More preferably, the protective material is hermetically heat sealed around the consumer goods to form the sealed enclosure.

Through an appropriate choice of the protective material, the disposable cartridges of kits according to the invention may exhibit excellent freshness-preserving properties over a prolonged period of time, thereby maintaining the quality of smoking articles or other consumer goods therein prior to the first opening of a reclosable pack or other container assembled from the kit.

Preferably, the protective material includes a line of weakness. Preferably, the line of weakness in the protective material extends around the sealed enclosure, proximate the opening in the outer housing of the disposable cartridge. In use, the line of weakness facilitates the removal of at least a portion of the protective material by the consumer in order to open the sealed enclosure and so gain access to the consumer goods therein. The line of weakness may, for example, be formed by stamping, scoring, perforating, embossing or otherwise compressing, cutting or weakening the protective material. Preferably, the line of weakness is a tear tape.

Alternatively, to facilitate opening of the sealed enclosure by the consumer, the protective material may comprise a hole or weakened region covered by a removable label or sticker. The removable label or sticker, which acts as a 'seal', preferably comprises a grip tab. In use, to open the sealed enclosure and so gain access to the consumer goods therein, the consumer removes the label or sticker, by pulling on the grip tab, in order to expose the hole in the protective material or remove the weakened portion thereof.

The reusable closure may be formed from any suitable materials. Preferably, the reusable closure is made from metal, plastic or a combination thereof. For example, where the outer housing has an opening at its upper end through which the sealed enclosure of consumer goods is accessible, the reusable closure may be a flexible, soft-touch plastic or metal cap. It will be appreciated, however, that the reusable closure is not necessarily a cap that closes the top of the outer housing, as the opening through which the sealed enclosure of consumer goods is accessible need not be located at the upper end of the outer housing.

Preferably, the reusable closure is formed from a polyolefin, in particular polyethylene or polypropylene, polyethylene terephthalate (PET) or acrylonitrile-butadiene-styrene (ABS) or any combination thereof.

Preferably, the lid is a hinge lid that is pivotable between the closed position and the open position.

Depending on the material from which it is made, the reusable closure may be formed in one piece. However, where the reusable closure is formed from a highly rigid material, for example a rigid plastic, the lid is preferably made separately from the remainder of the reusable closure and subsequently connected thereto, for example by a pin hinge.

The reusable cap may be made using any suitable conventional processes such as, for example, injection, bi-injection or compression moulding.

In one embodiment of the present invention, the reusable closure may be made of two or more different plastic materials or of two or more different colours of the same plastic material by bi-injection moulding. In an alternative embodiment, the reusable closure may be made from a combination of plastic and metal. In a yet further embodiment of the invention, the reusable closure may be made entirely of metal and include a metal hinge system that connects the metal lid to the remainder of the metal reusable closure.

The reusable closure, which may be transparent or opaque, may be coloured and may be provided with embossing, debossing and other known finishes such as, for example, frosted, matt, satin and metallic effects and patterns by, for example, the vacuum metallising, varnishing, laser etching, sublimation or any combination thereof of a plastic from which the reusable closure is formed.

In addition, the reusable closure may be printed, embossed or otherwise embellished (e.g. using labels or stickers) with manufacturer or brand logos, trade marks, slogans and other consumer information and indicia.

Preferably, at least a portion of the reusable closure is insertable into the outer housing through the opening. In a preferred embodiment, the outer housing is a sleeve having an open end and the reusable closure is a cap, at least a portion of which is insertable into the open end of the sleeve.

Preferably, the outer housing of the disposable cartridge includes at least one line of weakness extending from the opening, to facilitate disengagement of the reusable closure and the disposable cartridge. More preferably, the outer housing includes a pair of spaced apart, parallel, lines of weakness extending from the opening. Most preferably, a pair of spaced apart, parallel, lines of perforations. The spaced apart, parallel, lines of perforations define a "rip strip" in the outer housing, which extends from the opening. In use, a consumer can pull on this rip strip to separate the rip strip from the remainder of the outer housing along the pair of spaced apart, parallel, lines of perforations and so readily disengage the reusable closure and the disposable cartridge.

Preferably, the outer housing of the cartridge is provided with first retention means that, in use, cooperate with second retention means provided on the reusable closure.

Preferably, the first retention means are provided on the interior of the outer housing and the second retention means are provided on the exterior of a portion of the reusable closure that is insertable into the outer housing through the opening. The provision of first and second retention means in these locations advantageously results in the retention means not being not visible to the consumer once he or she has assembled a reclosable container by inserting the portion of the reusable closure into the outer housing through the opening.

Preferably, the first retention means and second retention means cooperate to produce a sound, more preferably a "clicking" sound. By producing a sound, the first retention means and second retention means advantageously provide the consumer with an audible indication that the cartridge and reusable closure have been properly releasably engaged and the kit thereby correctly assembled to form the reclosable container.

The first retention means and second retention means may comprise any suitable non-permanent, known coupling means. For example, the first retention means and second retention means may comprise a pair of magnetic strips or releasable pressure-actuated hook-and-loop type fasteners positioned on an inward facing surface of the outer housing and an outward facing surface of a portion of the reusable closure that is insertable into the outer housing through the opening. Alternatively, the retention means may comprise a flap pivotably mounted on one of the outer housing and the reusable closure and a corresponding lug or shoulder mounted on the other of the outer housing and the reusable closure.

In a preferred embodiment of the invention, the first retention means comprises at least one hole provided on a flap within the outer housing of the disposable cartridge and the second retention means comprises at least one outwardly projecting lug provided on the exterior of a portion of the reusable closure that is insertable into the outer housing through the opening.

In use, once the consumer goods within the disposable cartridge of a reclosable container assembled from a kit according to the invention have been consumed, the container may be disassembled by disengaging the reusable closure from the outer housing of the disposable cartridge. The consumer may then discard the empty disposable cartridge and assemble a further reclosable container of consumer goods by connecting the same reusable closure to a new, full, disposable cartridge of consumer goods.

Through the provision of a disposable cartridge and a reusable closure, kits according to the present invention advantageously help to reduce the quantity of waste materials generated when a consumer has used up the consumer goods in a container assembled there from.

For example, having smoked the cigarettes in a reclosable pack of cigarettes formed from a kit according to the present invention, the consumer discards only the empty disposable cartridge thereof. The cardboard outer sleeve and sheet of protective film are the only things thrown away and so less waste material is generated than on the disposal of a conventional cardboard hinge-lid cigarette pack, which additionally includes an inner foil or metallised paper liner and a cardboard inner frame as well as the cardboard forming the lid thereof.

According to the invention there is also provided a disposable cartridge of consumer goods for use in a kit according to the invention comprising: a sealed enclosure of consumer goods comprising a sheet of protective material wrapped around the consumer goods; an outer housing around the sealed enclosure of consumer goods, the outer housing having an opening through which the sealed enclosure of consumer goods is accessible; and means provided in the sheet of protective material for opening the sealed enclosure so as to allow access to the consumer goods therein through the opening in the outer housing.

Preferably, the disposable cartridge further comprises retention means provided on the interior of the outer housing for, in use, cooperating with a reusable closure inserted therein so as to releasably engage the reusable closure within the outer housing.

According to the invention there is further provided a reusable closure for use in a kit according to the invention comprising: a dispensing aperture extending across a top wall of the reusable closure into a side wall thereof; and a hinged lid pivotable between a closed position, in which the hinged lid covers the dispensing aperture, and an open position, in which the dispensing aperture is accessible.

Preferably, at least a lower portion of the reusable closure is dimensioned to be received within an open upper end of a sleeve housing a sealed enclosure of consumer goods, preferably a wrapped bundle of cigarettes. Preferably, the portion of the reusable closure dimensioned to be received within the open upper end of the sleeve is provided with retention means for, in use, cooperating with retention means provided on the interior of the sleeve so as to releasably engage the reusable closure with the sleeve.

Preferably, the retention means comprises at least one outwardly projecting lug.

The reusable closure and one or more disposable cartridges of smoking articles or other consumer goods according to the invention may be sold or otherwise distributed together, as part of a kit according to the invention, or may be distributed independently of one another.

A kit according to a particularly preferred embodiment of the invention, for the self-assembly of a reclosable pack of cigarettes, includes: a disposable cartridge of cigarettes comprising a bundle of cigarettes, a sheet of protective material wrapped around the bundle of smoking articles to form a sealed enclosure and an outer sleeve around the sealed enclosure, the outer sleeve having an open upper end; and a reusable cap comprising a dispensing aperture and a lid moveable between a closed position, in which the lid covers the dispensing aperture, and an open position, in which the dispensing aperture is accessible, the reusable cap and outer sleeve being releasably engageable through the insertion of at least a portion of the reusable cap into the open end of the outer sleeve so that the dispensing aperture of the reusable cap and the open upper end of the outer sleeve are substantially aligned.

The invention will be further described, by way of example only, with reference to the accompanying drawings in which:
Figure 1 shows a kit for the self-assembly of a reclosable pack of smoking articles according to the invention; and
Figure 2 shows a reclosable pack assembled from the kit of Figure 1.

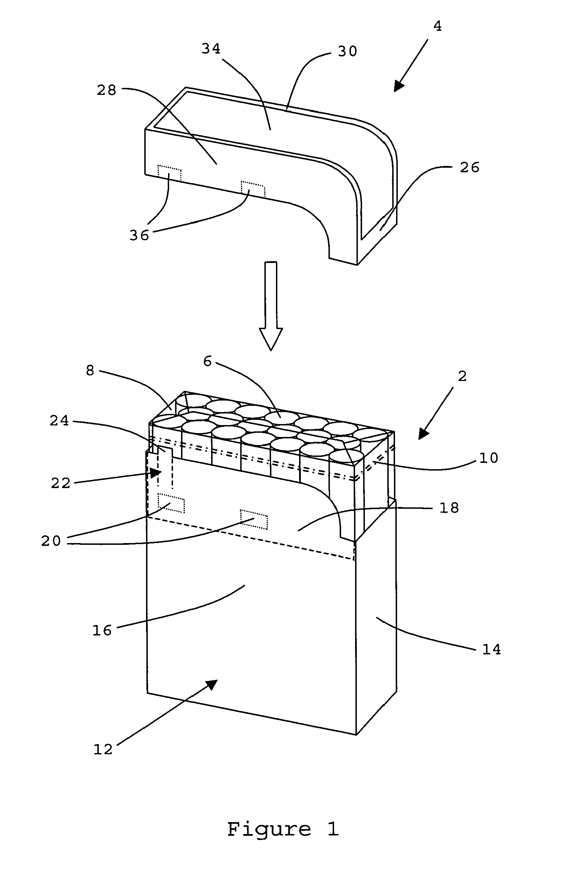

The kit shown in Figure 1 includes a disposable cartridge 2 and a reusable closure 4.

The disposable cartridge 2 comprises a bundle of twenty cigarettes 6, arranged in three parallel rows in a nested 7-6-7 collation, wrapped in a folded sheet of opaque, metallised, polypropylene film 8. A tear tape 10 provided in the film 8 (shown by dotted and dashed lines in Figure 1) extends around the bundle proximate the upper end of the cigarettes 6.

The disposable cartridge 2 further comprises an outer housing 12 within which the wrapped bundle of cigarettes 6 is housed. To prevent the wrapped bundle of cigarettes 6 from being accidentally removed from the outer housing 12, a portion of the outer surface of the folded sheet of opaque, metallised, oriented polypropylene film 8 is preferably affixed to a portion of the inner surface of the outer housing 12 with, for example, an adhesive.

The outer housing 12 is a cardboard sleeve of rectangular cross-section having an open upper end. The cardboard sleeve has a narrow front wall 14 and an opposed, parallel, narrow rear wall (not shown), a wide left side wall 16 and an opposed, parallel, wide right side wall (not shown), which connect corresponding side edges of the front wall 14 and the rear wall, and a bottom wall, which connects the lower edges of the front wall 14, rear wall, left side wall 16 and right side wall. As shown in Figure 1, the height of the front wall 14, rear wall, left side wall 16 and right side wall of the cardboard sleeve forming the outer housing 12 are such that the upper end of the wrapped bundle of cigarettes 6, standing on the bottom wall thereof, projects out of the open upper end of the cardboard sleeve beyond the top of the outer housing 12.

An opposed pair of flaps 18 (shown by dashed lines in Figure 1) located on the interior of the outer housing extend downwardly from the upper edges of the left side wall 16 and right side wall of the cardboard sleeve adjacent the inner surfaces thereof. Two opposed pairs of rectangular holes 20 (shown by dotted lines in Figure 1) are cut out from each of the opposed flaps 18, proximate the lower edges thereof.

A longitudinal rip strip 22 is defined in the left side wall 16 of the cardboard sleeve, and the flap 18 adjacent the inner surface thereof, by a pair of spaced apart, parallel, vertical perforations (shown by dashed lines in Figure 1) extending downwardly from the upper edge of the left side wall 16, adjacent the rear wall of the cardboard sleeve. A small tab 24 extends upwardly from the upper edge of the left side wall 16 of the cardboard sleeve at the top of the rip strip 22.

The reusable closure 4 is a cap having a narrow front wall 26 and an opposed, parallel, narrow rear wall (not shown), a wide left side wall 28 and an opposed, parallel, wide right side wall (not shown), which connect corresponding side edges of the front wall 26 and the rear wall, and a top wall 30, which connects the upper edges of the front wall 26, rear wall, left side wall 28 and right side wall.

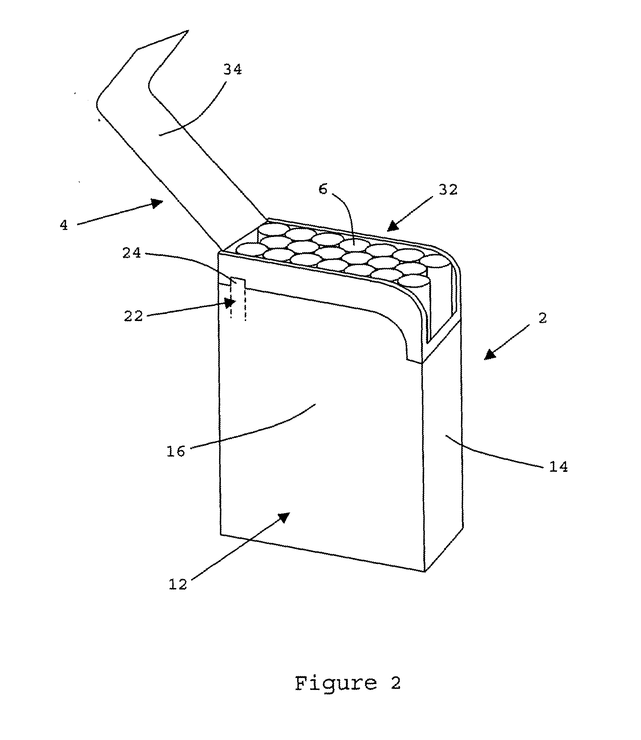

A dispensing aperture 32 (shown in Figure 2) extends across the top wall 30 of the reusable closure 4 into the front wall 26 thereof. As shown in Figure 1, the dispensing aperture 32 is covered by an integral lid 34, which is pivotably connected to the top wall 30 of the reusable closure 4, along a hinge line at the rear of the aperture 32, proximate and parallel to the rear side edge of the top wall 30 of the reusable closure 4.

Two opposed pairs of outwardly projecting lugs 36 (indicated by dashed lines in Figure 1) are provided on the left side wall and the right side wall of the reusable closure 4 along the lower edges thereof.

In use, to assemble the reclosable pack of cigarettes, the consumer places the reusable closure 4 over the upper end of the wrapped bundle of cigarettes 6 as indicated by the arrow in Figure 1 and inserts a lower portion thereof into the open upper end of the cardboard sleeve forming the outer housing 12 of the disposable cartridge 2.

As the lower portion of the reusable closure 4 is pushed into the open upper end of the cardboard sleeve, the two opposed pairs of outwardly projecting lugs 36 along the lower edges of the left side wall and the right side wall of the reusable closure 4 pass downwardly over the surface of the opposed pair of flaps 18 adjacent the inner surfaces of the left side wall 16 and right side wall of the cardboard sleeve. As they near the lower edges of the opposed pair flaps 18, the outwardly projecting lugs 36 fall into and are retained by the two opposed pairs of rectangular holes 20 provided in the opposed pair of flaps 18. The interaction between two opposed pairs of outwardly projecting lugs 36 and two opposed pairs of rectangular holes 20 holds the lower portion of the reusable closure 4 within the cardboard sleeve, preventing accidental separation of the reusable closure 4 from the disposable cartridge 2.

In addition to providing a latching effect, the construction and dimensions of the opposed flaps 18, rectangular holes 20 and outwardly projecting lugs 36 are preferably such that, in use, the retention of the lugs 36 in the rectangular holes 20 in the opposed flaps 18 produces a clicking sound, thereby providing the consumer with an audible indication that the reusable closure 4 has been properly engaged with the cartridge 2.

To prevent the consumer from inserting the reusable closure 4 too far into the outer housing 12 of the disposable cartridge 2 during assembly of the reclosable pack, and so potentially damaging the upper ends of the cigarettes 6 in the wrapped bundle housed therein, the front wall 26, rear wall, left side wall 28 and right side wall of the reusable closure 4 are preferably profiled so that only a pre-determined desired portion of the reusable closure 4 is suitably dimensioned to fit within the cardboard sleeve.

Once the lower portion of the reusable closure 4 has been correctly inserted into the outer housing 12 of the cartridge 2, the consumer opens the integral lid 34 of the reusable closure 4, by pivoting it about the hinge line, to expose the dispensing aperture 32 extending across the top wall 30 of the reusable closure 4 into the front wall 26 thereof. With the integral lid 34 of the reusable closure 4 in the open position shown in Figure 2, the consumer then pulls on the tear tape 10 in the folded sheet of transparent polypropylene film 8 (shown in Figure 1) in order to separate the upper portion thereof, above the tear tape 10, from the remainder of the polypropylene wrapper and so expose the upper end of the bundle of cigarettes 6 in the cartridge 2 as shown in Figure 2. The consumer may then remove one or more cigarettes from the bundle through the dispensing aperture 32 in the reusable cap 4.

The integral lid 34 of the reusable closure 4 allows the assembled pack of cigarettes 6 to be repeatedly opened and closed by the consumer. Preferably, the reusable closure 4 and integral lid 34 are provided with a "click-close" or other known mechanism or feature that provides the consumer with an audible indication of the closing or opening of the assembled pack.

Once all of the cigarettes 6 have been removed, the consumer separates the reusable closure 4 from the empty disposable cartridge 2 by pulling the reusable closure 4 upward to remove the lower portion thereof from the upper end of the outer housing 12. To facilitate removal of the reusable closure 4 from the outer housing 12, before pulling the reusable closure 4 upward, the consumer grasps the small upstanding tab 24 at the top of the rip strip 22 and pulls downwardly to separate the rip strip 22 from the remainder of the left side wall 16 of the cardboard sleeve along the pair of spaced apart, parallel, vertical perforations. Having ripped or torn the cardboard sleeve along the perforations, the consumer may then readily overcome the latching effect between the pairs of opposed lugs 36 on the reusable closure 4 and the opposed pairs of rectangular holes 20 on the opposed flaps 18 of the cardboard sleeve in order to remove the reusable closure 4 from the cardboard sleeve; this may also produce a clicking sound.

To further facilitate the separation of the reusable closure 4 and the disposable cartridge 2, the outer housing 12 of the disposable cartridge 2 may include a second rip strip in the right side wall of the cardboard sleeve. The rip strip 22 shown in Figures 1 and 2 extends only part way down the left side wall 16 of the cardboard sleeve. The disposable cartridges of kits according to the invention may, however, comprise one or more rip strips extending part way or all the way along the outer housing from the opening.

Once the reusable cover 4 has been removed from the outer housing 12, the empty disposable cartridge 2 can then be discarded and the reusable closure 4 releasably engaged with the outer housing of a new, full cartridge 2 of cigarettes 6 in the same manner previously described.

To form the disposable cartridge 2 shown in Figure 1, a nested 7-6-7 collation of twenty cigarettes 6 is formed and wrapped by folding a sheet of polypropylene film about the bundle of cigarettes 6 in a conventional manner. The wrapped bundle may then be inserted in a pocket on a wrapping wheel that is indexable between a number of stations. Prior to insertion of the wrapped bundle of cigarettes, the pocket is lined with a laminar cardboard blank including various panels and flaps, which when folded about appropriate score lines produce the cardboard sleeve that forms the outer housing 12 of the disposable cartridge 2. As the wrapping wheel indexes around from station to station, the laminar cardboard blank is folded in stages around the bundle of cigarettes 6 in a known manner using conventional machinery to form the disposable cartridge 2. Alternatively, the outer housing 12 may be pre-erected, by folding the various panels and flaps of the laminar cardboard blank about the appropriate score lines to produce the cardboard sleeve, and the wrapped bundle of cigarettes 6 then inserted into the pre-erected outer housing 12 to form the disposable cartridge 2.

The reusable closure 4 may be made using any suitable conventional process such as, for example, injection, bi-injection or compression moulding.

While the invention has been exemplified with reference to a kit for the self-assembly of a reclosable pack of cigarettes, it will be appreciated that kits according to the invention for the self-assembly of reclosable containers of other consumer goods may be similarly produced.

It will also be appreciated that while the cartridge of cigarettes of the kit for the self-assembly of a reclosable pack of cigarettes described above has right-angled edges, kits for the self-assembly of reclosable containers according to the invention and the cartridges therefore may have, for example, one or more rounded or bevelled longitudinal or transverse edges.

## Claims

1. A kit for the self-assembly of a reclosable container of consumer goods (6) including:
a disposable cartridge (2) comprising:
a sealed enclosure of consumer goods (6); and
an outer housing (12) around the sealed enclosure of consumer goods (6) having an opening through which the sealed enclosure of consumer goods (6) is accessible; and
a reusable closure (4) comprising:
a dispensing aperture (32); and
a lid (34) moveable between a closed position, in which the lid (34) covers the dispensing aperture (32), and an open position, in which the dispensing aperture (32) is accessible,
the reusable closure (4) and the outer housing (12) of the disposable cartridge (2) being releasably engageable so that the dispensing aperture (32) of the reusable closure (4) and the opening of the outer housing (12) are substantially aligned.

2. A kit according to claim 1 wherein at least a portion of the reusable closure (4) is insertable into the outer housing (12) of the disposable cartridge (2) through the opening.

3. A kit according to claim 2 wherein the outer housing (12) of the disposable cartridge (2) is provided with first retention means (20) that, in use, cooperate with second retention means (36) provided on the reusable closure (4), the first retention means (20) being provided on the interior of the outer housing (12) and the second retention means (36) being provided on the exterior of the portion of the reusable closure (4) that is insertable into the outer housing (12) through the opening.

4. A reclosable container of consumer goods (6) assembled from a kit according to any of claims 1 to 3.

5. A disposable cartridge (2) of consumer goods (6) comprising:
a sealed enclosure of consumer goods (6) comprising a sheet of protective material (8) wrapped around the consumer goods (6);
an outer housing (12) around the sealed enclosure of consumer goods (6), the outer housing (12) having an opening through which the sealed enclosure of consumer goods (6) is accessible; and
means (10) provided in the sheet of protective material (8) for opening the sealed enclosure so as to allow access to the consumer goods (6) therein through the opening in the outer housing (12).

6. A disposable cartridge (2) according to claim 5 further comprising retention means (18) provided on the outer housing (12) for, in use, cooperating with a reusable closure (4) to releasably engage the reusable closure (4).

7. A disposable cartridge (2) according to claim 6 wherein the retention means (18) are provided on the interior of the outer housing (12) for, in use, cooperating with a portion of the reusable closure (4) inserted therein so as to releasably engage the portion of the reusable closure (4) within the outer housing (12).

8. A disposable cartridge (2) according to claim 5, 6 or 7 wherein the outer housing (12) includes at least one line of weakness (10) extending from the opening.

9. A disposable cartridge (2) according to claim 8 wherein the outer housing (12) includes a pair of spaced apart, parallel, lines of weakness (10) extending from the opening.

10. A disposable cartridge (2) according to any of claims 5 to 9 wherein the outer housing (12) is a sleeve having an open end.

11. A disposable cartridge (2) according to any of claims 5 to 10 wherein the sealed enclosure protrudes from the outer housing (12) through the opening.

12. A disposable cartridge (2) according to any of claims 5 to 11 wherein the sheet of protective material (8) includes a line of weakness (10) that extends around the sealed enclosure.

13. A disposable cartridge according to any of claims 5 to 12 wherein the consumer goods are smoking articles (6).

14. A reusable closure (4) for use in a kit according to claim 1 comprising:
a dispensing aperture (24) extending across a top wall of the reusable closure (4) into a side wall thereof; and
a hinged lid (34) pivotable between a closed position, in which the hinged lid (34) covers the dispensing aperture (32), and an open position, in which the dispensing aperture (32) is accessible.

15. A reusable closure (4) according to claim 14 wherein at least a lower portion of the reusable closure (4) is dimensioned to be received within an open upper end of a sleeve (12) housing a sealed enclosure of consumer goods (6), that portion of the reusable closure dimensioned to be received within the open upper end of the sleeve (12) being provided with retention means (36) comprising at least one outwardly projecting lug for, in use, cooperating with retention means (20) provided on the interior of the sleeve (12) so as to releasably engage the reusable closure (4) with the sleeve (12).
